# EUROPEAN PATENT SPECIFICATION

(11) **EP 2 692 694 B1**
(45) Date of publication and mention of the grant of the patent: **26.10.2016**
(21) Application number: 12765347.5
(22) Date of filing: 27.03.2012
(51) Int. Cl.: C02F 1/32, C02F 1/36, B01J 19/08, C02F 1/46, C02F 1/461

(54) **DEVICE FOR REMOVING ORGANIC AND CHEMICAL MICROBIC POLLUTANTS FROM WATER**
VORRICHTUNG ZUR ENTFERNUNG VON ORGANISCHEN UND CHEMISCHEN MIKROBISCHEN VERUNREINIGUNGEN AUS WASSER
DISPOSITIF DE PURIFICATION DE L'EAU DES CONTAMINANTS MICROBIENS ORGANIQUES OU CHIMIQUES

(30) Priority: 29.03.2011 RU 2011111756
(43) Date of publication of application: 05.02.2014
(73) Proprietor: Obshchestvo S Ogranichennoy Otvetstvennostyu «Plazma-Pro», Saratov 410005 (RU)
(72) Inventor: BARKHUDAROV, Eduard Mikhaylovich, Moscow 119296 (RU); TAKTAKISHVILI, Merab Ivanovich, Moscow 119049 (RU); ANPILOV, Andrey Mitrofanovich, Moscow 123308 (RU); KOSSYJ, Igor Antonovich, Moscow 119333 (RU)
(74) Representative: Bucher, Ralf Christian
(86) International application number: PCT/RU2012/000221
(87) International publication number: WO 2012/134350

(56) References cited:
- JP-A- 2002 192 161
- JP-A- 2006 244 938
- JP-A- 2006 244 938
- SU-A1- 1 770 269
- US-A1- 2002 014 400
- US-B2- 6 558 638

## Description

### Field of the invention

The invention relates to ecology, in particular to apparatus for treating liquids (water, solutions thereof, and the like) by chemical plasma technique to produce an effect on the microbiological and chemical components thereof (to dispose of toxicants).

### Background of the invention

Using an electrical discharge generated in water to purify it from microbial, organic, and chemical pollutants is a promising area of electrophysical ecological techniques (electron beam, ozonizing, electrical discharge, and so on). These techniques are different from any others in the sense that they do not require harmful and hazardous chlorine- and fluorine-containing substances to be used. A highly effective electric discharge generated in water is the simplest and least expensive of them.

It is common knowledge that the effect of a pulsed high-voltage discharge on water and solutions thereof is contributed by the following factors:
1. Local effect: Discharge is focused in the area of plasma channels of leaders and streamers and is caused by the effect of hydrated electrons, ions, and active radicals (effective within the range of ≤ 10 mm); and
2. Non-local effects: Wave processes - mechanical (acoustic and shock waves) and electromagnetic (UV radiation) - that have a direct and photolytic effect, such as generation of active OH radicals, and so on (effective within the range of ≤ 30 to 40 mm).

All these factors exert a synergistic effect on a liquid.

A significant point to make is that water containing chemical pollutants generally has a high electrical conductivity that impedes generation of a pulsed high-voltage discharge at a relatively low pulse energy (0.1 to 10 J). A way to go around these problems is introducing gas bubbles into the gap between the electrodes (K.A. Nagulny and N.A. Roy, "An Electric Discharge in Water," Nauka, Moscow, 1971).

A prior art apparatus uses a multi-electrode discharge device and incombustible gas (air, nitrogen, argon, or other) pumped through the gap between the electrodes to generate a periodic pulsed discharge in a liquid (water and solutions thereof) to exercise an effect on its microbiological, organic, and chemical components (U.S. Patent No. 6,558,638, B2, February 7, 2002).

The device immersed in a liquid is a cylindrical dielectric pipe having its outside surface encircled by an n-number of cylindrical annular electrodes (made of stainless steel, copper, titanium, or other) arranged at an identical spacing from one another. The ends of the electrodes are their working surfaces, and the outside cylindrical surface of the electrodes is coated with an insulating material. The wall of the dielectric pipe in the gap between the electrodes is provided with a few apertures ≤ 1 mm in diameter for gas bubbles to be admitted into the liquid from the pipe interior. High voltage is applied to the two outlying electrodes, directly to one electrode and through a return conductor running inside the pipe to the other electrode.

The discharge generated in the gas bubbles is a source of powerful ultraviolet radiation and active particles (O₃, H₂O₂, OH, O, etc.).

Powerful acoustic and shock (UV) waves generated upon collapse of the bubbles are a further factor exerting an effect on the microbial, organic, and chemical components of the liquid.

The prior art apparatus has the following disadvantages:
1. The linear geometry of the discharge device rules out the possibility of UV radiation and acoustic waves generated by the discharge being focused;
2. It is difficult and inconvenient to position the discharge device and the systems in water to deliver high voltage and gas to the discharge device, and the discharge device is a further obstacle to liquid flow when the discharge system is operated therein;
3. The hydrostatic pressure created by the discharge device placed in the liquid flow cause gas to flow irregularly through apertures provided along the length of the discharge device and may affect the stability and identify of discharge channels; and
4. The apparatus as a whole has a relatively complicated design.

### Summary of the invention

It is an object of this invention to expand the range of engineering water purification capabilities by focusing UV radiation and acoustic waves.

The technical result of this invention is an apparatus that is simple to make, does not comprise any expensive mechanical or electronic devices, and exerts a profound effect on bacterial, organic, and chemical pollutants in water and solutions thereof (including disposal of toxicants).

This technical result is attained in an apparatus for purifying water from microbiological organic and chemical pollutants that comprises a working chamber, a water pumping system, a system to deliver gas to the apparatus, and a multi-electrode discharge device, in which gas is injected into the gap between the electrodes, the working chamber being designed as a cylindrical dielectric pipe for a liquid to be pumped through it, the electrodes of the discharge device being provided on the inside surface of the pipe in a circle at an identical spacing between one another, the surfaces of the electrodes being coated with an electrically insulating material, apertures being provided between the "working" surfaces of the electrode for admitting gas into the chamber and the pipe space, and the system for applying high voltage and gas to the discharge device being provided beyond the working chamber.

### Brief description of the drawings

FIG. 1 and FIG. 2 show cross-sectional views of the dielectric pipe for pumping a liquid through;
FIG. 3 and FIG. 4 show equivalent electric circuit diagrams of the apparatus;
FIG. 5 is a view of two projections of a section of the annular discharge device; and
FIG. 6 is a diagrammatical view of the water treatment apparatus.

### Embodiments of the invention

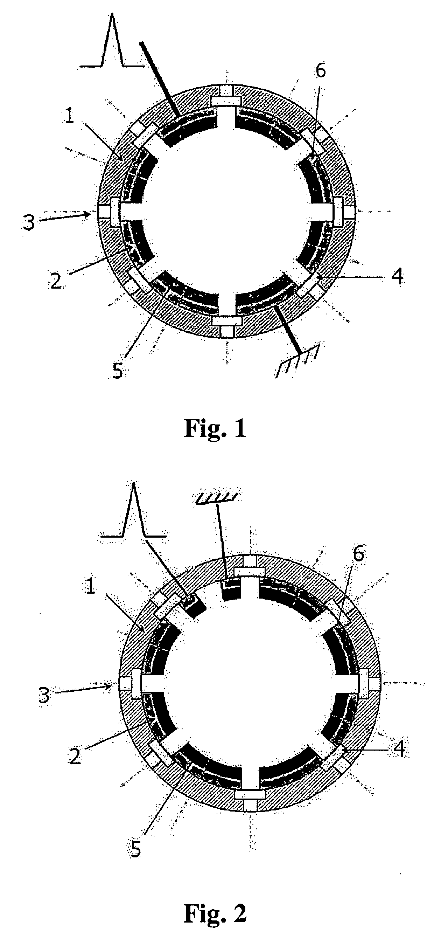

A diagrammatical view of the claimed apparatus in FIG. 1 shows the cross-section of a dielectric pipe 1 for water being treated to be pumped through and a discharge system provided on the inside surface of the pipe. An N number of electrodes 2, more specifically, N = 8, are arranged in a circle on the inside surface of dielectric pipe 1 at an identical spacing from one another. The surfaces of the electrodes facing the central line of the pipe are coated with electrically insulating material 5 and apertures 3 of a diameter d ≤ 1 mm are provided in the dielectric pipe between the "working" surfaces 6 of electrodes to admit gas into a hollow 4 and further into the gaps between the electrodes.

High voltage is applied to two diametrically opposite electrodes and, as a result, an electric spark strikes across the gaps between the electrodes and plasma channels are formed as sources of active particles (hydrated electrons, H₂O₂, OH, O, and so on), powerful UV radiation, and hydrodynamic disturbances (acoustic and shock waves).

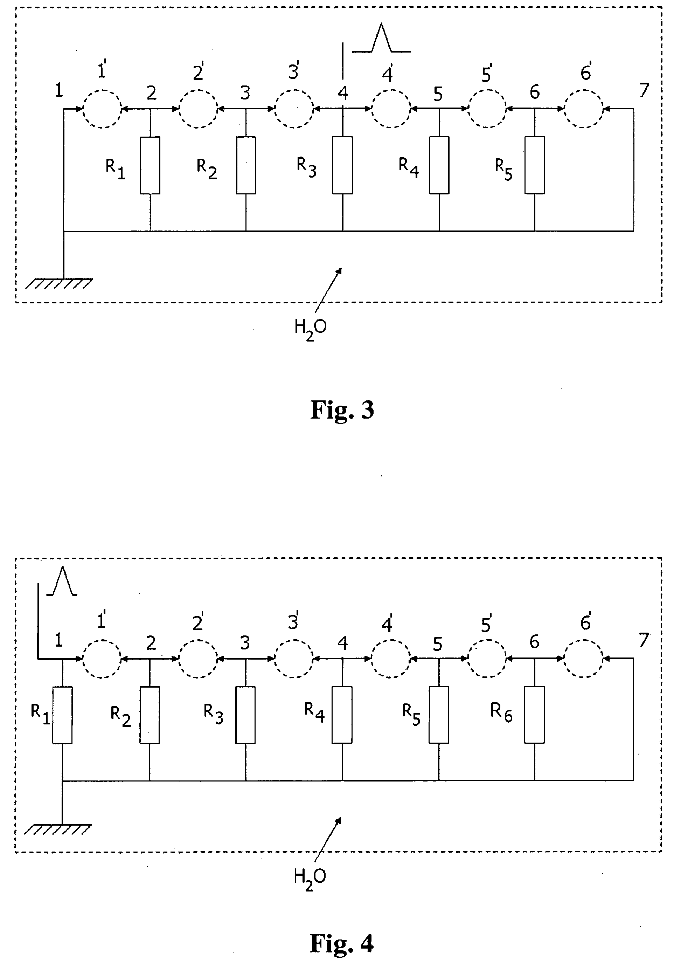

An equivalent electric circuit diagram of the apparatus is shown in FIG. 3.

Water is a conducting dielectric. The equivalent resistances (R1-R5) shown in FIG. 3 are water resistances between the respective electrodes and ground. In this circuit diagram of high voltage application, discharge current flows in parallel in two symmetrical sections of the circuit (spark gaps 2-1 and 4-6), numbers (1'-6') indicating gas bubbles in the spark gaps between the electrodes.

Discharge channels forming in a symmetric relationship in a circle serve to focus UV radiation and hydrodynamic disturbances to achieve greater efficiency of discharge sparking on water.

Effective formation of a discharge is facilitated by the interface between two media (water and gas) in the gaps between the electrodes. The high water permittivity ε = 81 intensifies the electric field in gas at the liquid-gas interface and lowers the sparkover threshold significantly. An intensified electric field and equivalent resistances stimulate development of an annular discharge creeping along the inside surface of the pipe as water is pumped through it.

FIG. 3 illustrates another circuit diagram of high voltage application that indicates (at 1'-6') gas bubbles in the spark gaps between the electrodes. In this circuit, current flows in series through all spark gaps. A respective equivalent circuit diagram is shown in FIG. 4.

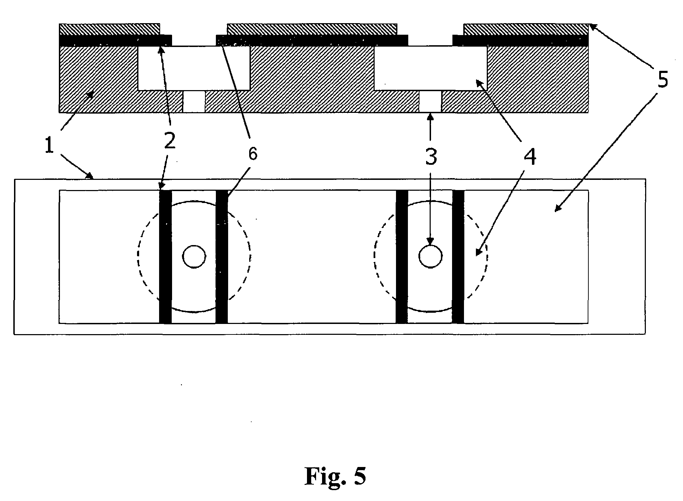

FIG. 5 shows two projections of a section of the annular discharge device. The bottom view is a straightened section of the inside surface of pipe 1, showing electrodes 2, gas injection apertures 3, gas accumulation hollow 4, dielectric material layer 5, and "working" surfaces 6 of the electrodes.

Discharge system 12 attached to the inside surface of the pipe does not, therefore, impede the flow of liquid, and all gas piping and wiring applying high voltage to the discharge device are provided on the outside surface of the pipe.

The discharge is powered by a periodic pulse generator of high-voltage pulses having the following characteristics: voltage U ≤20 kV, pulse repetition rate f ≤ 100 Hz, and storage capacitor energy W ≤ 2 J (C = 10⁻⁸ F). As a result, the generator develops a current I ≤ 300 A, current pulse duration τ = 3-5 µsec, and mean power N≤ 200 V.

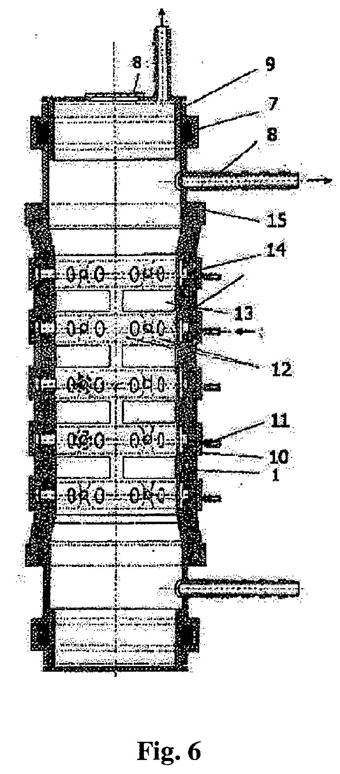

FIG. 6 shows a diagrammatic view of a water treatment apparatus having five annular discharge devices spaced along a pipe for water or water solutions being treated to be pumped through. The apparatus comprises a dielectric pipe 1, spacer 7, tap 8, plug 9, sealing rubber cover 10, air delivery nipple 11, discharge-generating system 12, port 13, seal 14, and collar 15.

Each annular source is connected to a separate output channel of a five-channel high-voltage pulse generator, each channel having characteristics as described above, for the apparatus to develop a mean power N = 10³ V.

The apparatus is operated as follows: Gas is injected through nipple 11 and a liquid is pumped in through taps 8, whereupon high voltage is applied to the discharge devices.

The gas injection and liquid pumping rates are adjustable. Gases passing through the liquid treated are delivered to a bubbler.

### Industrial applicability

The claimed apparatus may be used for purifying water from microbiological, organic, and chemical pollutants of water (in natural bodies of water, including water sources of various industrial enterprises).

## Claims

1. An apparatus for purifying water from microbiological, organic, and chemical pollutants, comprising
a working chamber,
a liquid pumping system,
a system to deliver gas to the apparatus, and
a multi-electrode discharge device,
gas being injected into the gaps between the electrodes,
**characterized in that**
the working chamber is a cylindrical dielectric pipe (1) for pumping a liquid through,
the electrodes (2) of the discharge device are provided on the inside surface of the pipe (1) in a circle at an identical spacing from one another,
the surface of the electrodes (2) is coated with an electrically insulating material (5),
apertures (3) are provided between the "working" surfaces (6) of the electrodes for delivering gas to a hollow (4) and into the pipe space, and
the system to apply high voltage and deliver gas to the discharge device is provided beyond the working chamber.

## Patentansprüche

1. Eine Vorrichtung zum Reinigen von Wasser von mikrobiologischen, organischen und chemischen Verunreinigungen, aufweisend
eine Arbeitskammer,
ein Flüssigkeitspumpsystem,
ein System zum Liefern von Gas an die Vorrichtung, und
eine Mehr-Elektroden-Entladungsvorrichtung,
wobei Gas in die Zwischenräume zwischen den Elektroden eingespritzt wird,
**dadurch gekennzeichnet, dass**
die Arbeitskammer ein zylindrisches dielektrisches Rohr (1) zum Durchpumpen einer Flüssigkeit ist,
die Elektroden (2) der Entladungsvorrichtung auf der Innenfläche des Rohres (1) in einem Kreis bei gleichem Abstand voneinander vorgesehen sind,
die Oberfläche der Elektroden (2) mit einem elektrisch isolierenden Material (5) beschichtet ist,
Öffnungen (3) zwischen den "arbeitenden" Flächen (6) der Elektroden zur Abgabe von Gas in einen Hohlraum (4) und in den Rohrinnenraum vorgesehen sind, und
das System zum Anlegen einer Hochspannung und zum Liefern von Gas an die Entladungsvorrichtung über der Arbeitskammer vorgesehen ist.

## Revendications

1. Appareil destiné à purifier l'eau de microbiologiques, organiques et des polluants chimiques, comprenant
une chambre de travail,
un système de pompage de liquide,
un système destiné à délivrer du gaz à l'appareil, et
un dispositif de décharge à électrodes multiples,
le gaz étant injecté dans les interstices entre les électrodes,
**caractérisé en ce que**
la chambre de travail est un tube diélectrique cylindrique (1) destiné à pomper un liquide à travers,
les électrodes (2) du dispositif de décharge sont prévus sur la surface intérieure du tube (1) dans un cercle à une distance identique les unes des autres,
la surface des électrodes (2) est revêtue d'un matériau électriquement isolant (5),
ouvertures (3) sont prévus entre les surfaces de «travail» (6) des électrodes pour délivrer du gaz à un creux (4) et dans l'espace de tube, et
le système pour appliquer une haute tension et délivrer du gaz au dispositif de décharge est prévu au-delà de la chambre de travail.
